# EUROPEAN PATENT SPECIFICATION

(11) **EP 0 694 217 B1**
(45) Date of publication and mention of the grant of the patent: **15.10.1997**
(21) Application number: 92918078.4
(22) Date of filing: 20.08.1992
(51) Int. Cl.: H01R 4/00, H01R 4/62, B60L 5/20

(54) **A METHOD OF FORMING AN ELECTRICALLY CONDUCTIVE JOINT BETWEEN CARBON AND METAL, AND AN ARTICLE COMPRISING A CONDUCTIVE JOINT BETWEEN CARBON AND METAL**
VERFAHREN ZUM HERSTELLEN EINER ELEKTRISCH LEITENDEN VERBINDUNG ZWISCHEN KOHLE UND METALL,UND VORRICHTUNG MIT EINER LEITENDEN VERBINDUNG ZWISCHEN KOHLE UND METALL.
PROCEDE DE FORMATION D'UNE JONCTION ELECTROCONDUCTRICE ENTRE DU CARBONE ET UN METAL, ET UN ARTICLE COMPRENANT UNE JONCTION CONDUCTRICE ENTRE DU CARBONE ET UN METAL

(30) Priority: 04.09.1991 GB 9118968
(43) Date of publication of application: 31.01.1996
(73) Proprietor: MORGANITE ELECTRICAL CARBON LIMITED, Swansea Glamorgan SA6 8PP Wales (GB)
(72) Inventor: WHITE, Albert, Edward, Sutherland, Morriston Swansea SA6 8PP (GB)
(74) Representative: Boff, James Charles
(86) International application number: GB9201533
(87) International publication number: WO9305545

(56) References cited:
- EP-A- 0 237 114
- DE-A- 3 821 254
- GB-A- 1 259 454
- GB-A- 2 202 999

## Description

This invention relates to a method of forming electrically conductive bonds between carbon and metal. The invention is particularly, though not exclusively, applicable to the bonding of carbon blocks to aluminium carriers in current collectors. Current collectors are used, inter alia, for electric trams, railway locomotives, and rail motor coaches.

Current collectors comprise a carrier of metal (usually aluminium) to which is secured a carbon block. The current collector is held on a frame capable of vertical movement so that the carbon block can be maintained in contact with an overhead cable. Current supplied through the overhead cable passes through the carbon block, through the carrier, and thence by cables to the motor of the vehicle concerned.

There are many methods of securing the carbon to its metal carrier. Soldering is not very practical, as normal solders do not wet carbon or aluminium and special solders and/or pre-treatments of carbon or aluminium are needed. This process is difficult.

Synthetic resins (e.g. modified phenolics, epoxies etc), can give good bonds but are insulators. At present conductivity in such systems is achieved by:-
a) loading resin with conducting metallic particles. This gives a high resistant joint and it is usual to copper plate the carbon before bonding as shown in Austrian Patent Specification No. 322629.
or b) providing metal strips, braid, gauze etc in the joint between carrier and carbon block before bonding. This gives thick joints which are known to be weak (optimum joint thickness is generally considered as 0.02-0.1mn, joints above or below this thickness generally have lower shear strength J. *Shields, 'Adhesives Handbook' 3rd Edition 1984 Butterworth,).* The carbon is usually plated for the same reasons as in a) above.

The gauze or braid may be inset in a groove in the carbon but this reduced the area of electrical contact.

Copper plating as mentioned in a) and b) above is not totally successful as the copper/carbon bond is weak and so it is necessary to make the plating very thick (up to 0.5mm thick) and extend it up the sides of the carbon to bed in grooves to give good strength. Such thick coatings are very expensive.

GB 2202999 discloses an electrical contact having contact surfaces formed by a porous electrically conducting material filled with adhesive such that when the electrical contact is placed in engagement with another similar electrical contact no initial adhesion takes place but a permanent adhesive bond forms after a period of time. This document does not address the problem of securing carbon to metal.

Accordingly the present invention provides a method of forming an electrically conductive joint between a carbon body joint surface and a metal body joint surface comprising the steps of:-
i) providing a porous metal coating on at least the carbon body joint surface,
ii) bonding said joint surfaces with an adhesive which penetrates the porosity of the metal coatings and penetrates the porosity of the carbon body joint surface;
the porous metal coating providing an electrically conductive path, and the adhesive providing a bond, between the carbon body joint surface and the metal body joint surface.

The invention also provides an article joined by such a method.

By forming a joint using this method good electrical conductivity is ensured through the intimate contact between porous coating and carbon and the roughness and porosity of the porous coating ensures good electrical contact with the metal body. When both metal and carbon are coated the close face to face contact between the porous coatings which, due to their roughness and porosity interlock and engage at a large number of points, gives improved electrical conductivity.

The porous metal coatings may be applied by e.g. flame or arc spraying copper or zinc or by any other suitable method.

The joint is thin as there are no metal particles or gauze or braid to keep the surfaces apart and the porous nature of the metal coating allows the resin to penetrate through to the underlying carbon or metal, and to slightly penetrate the surface of the carbon which is porous, and thus give a good bond irrespective of the bond between the carbon or metal and the metal coating.

The bonding resin is sufficiently liquid at some stage to penetrate the porous metal coatings for this bonding to occur and hence the original resin could be thin or could thin during the heating process when cured or could be formed in situ from thin components.

The adhesive may be, for example, any convenient resin e.g. phenolic or epoxy. The resin can be cold curing or heat setting and may be in tape form if preferred.

To make a current collector the coated carbon body and aluminium carrier having the resin applied, are clamped together, and freed once the resin has set.

A fuller description follows with reference to the drawings in which:-
Fig. 1 is a cross-section of a carbon/aluminium current collector body as used for testing;
Fig. 2 is a schematic showing the resistance testing apparatus used;
Fig. 3 is a schematic showing the shear strength testing apparatus used.

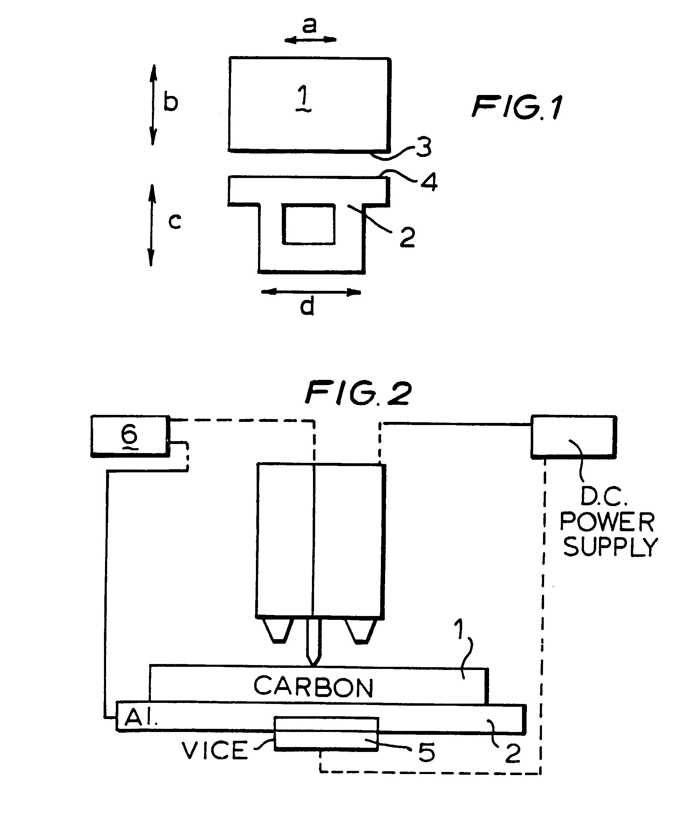

In Fig. 1 a test piece comprises a body of carbon 1 and a body of 2mm thick extruded aluminium 2. The dimensions are as shown in Table 1.

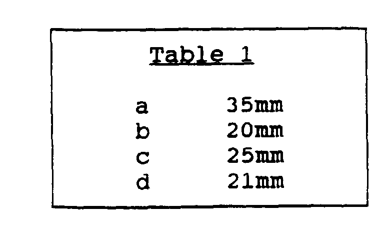

Carbon and aluminium surfaces to be bonded (3,4) are grit blasted (44/60 silicon carbide grit) to roughen them. Both surfaces 3,4 are sprayed with copper using a Oxy/Propane wire gun (Metallisation Co). The thickness of coating is normally about 100µm. The upper limit to thickness for this type of metal coating is approximately 300µm. Thicker than this and internal stresses can cause the metal to peel off the carbon. Further such a thickness causes difficulty in penetration by the resin.

The copper coat must be permeable to resin during cure of the resin and this feature is dependent on porosity/permeability of copper, the thickness of copper, and the viscosity of the resin. Different flame spray guns and other techniques of spraying copper or other metal will give different permeability and residual stresses and hence different limiting thicknesses; while the type of resin and curing conditions will govern the viscosity of the resin. An additional reason for applying a thin coating of the metal is of course cost.

The minimum thickness of coating is set by the need to get good electrical conductivity. It is probable that about 10µm is a lower limit for small flat pieces in good mechanical contact. For longer or curved pieces where good mechanical contact is not so easy to obtain (e.g. 1 metre long curved pantographs) thicker coatings of 25-50µm or greater are preferred.

Resin is applied to both the grit blasted surfaces and spread well over all areas to be bonded. A suitable resin is Ciba MY750 with hardener HT972 mixed in the ratio MY750 - 100 parts by weight, HT972 - 30 parts by weight. The mixture is warmed to dissolve the HT972 (a solid) in the MY750 (a viscous liquid) and to make the overall resin thinner and easier to apply. The thickness of the resin employed is a matter for experiment and test dependent on the porosity of the carbon body involved, the metal coating involved and the speed of curing the resin. If the resin is too thin at any stage excessive amounts of resin are soaked up in the porous carbon body leaving less for the joint. Too thick, and the resin does not penetrate the porous metal coatings and bond to the carbon or aluminium. A thick cold setting resin can be improved by heating which not only thins it down but also speeds up the cure rate. There is a balance of heating rate and temperature of cure with thinning/setting which as stated above, can only be determined experimentally on a case by case basis.

As mentioned above, if the resin becomes too thin at any stage this can lead to excessive soaking up in the porous carbon and hence insufficient resin being present to form a joint. It is possible to counter this by thickening the resin with fine fillers, e.g. fumed silica, powdered chalk, powdered slate, powdered sand or powdered mica.

The pieces to be bonded together are clamped together with spring loaded G clamps at about 10cm intervals. Each spring applied a force of about 501bs (20Kgs). Any excess glue that exudes out is wiped off. The resin is cured by placing in an oven at 150°C and left for 1½ hrs. Bonded pieces are allowed to cool before the clamps are removed.

Resins other than epoxy resins are suitable such as phenolic resins, polyester resins, melamines and possibly silicones. Thermoplastics are less attractive for this application due to the loss of properties at high temperatures but they cannot be ruled out completely. As for the area of application it has been found best to coat all surfaces to ensure the maximum bonding area but this is not essential.

For long pieces e.g. 1 metre long, clamping can be very important. If it is too tight, thermal expansion mismatch of the carbon and aluminium on heating up can cause breakage of the carbon. If it is too loose, there is excessive high resistance on cooling after cure, as the gap between carbon and aluminium is too wide. An intermediate pressure must be found by trial and error which allows some relative slip of carbon and aluminium on heating up but keeps the gap reasonably narrow to give low resistance.

For larger scale production of long pieces, a bonding press can be used and this enables the problems with clamps to be avoided. The method of use of such a press is as follows. The pieces to be bonded are placed in the press after bonding resin application and lightly pressed together so that slippage due to relative thermal expansion of carbon and aluminium can take place.

The pieces are then heated to an intermediate temperature e.g. 90°C such that most of the thermal expansion mismatch can take place freely but the resin does not cure to any great extent. The press is then closed to a higher pressure to bring the carbon and aluminium into close contact and prevent any more relative slip. Finally, the temperature is rapidly raised to cure the resin (e.g. to 120-130°C). By this means, cracking of carbon due to excessive thermal expansion and mismatch is eliminated and low resistance joints can be made.

For the curing cycle of the resin other curing cycles are possible although the applicants have found that for the MY750/HT972 mixture described above 150°C for 1 hour gives the best strength. This is not an essential step although whatever resin is used the curing cycle should be such that the resin is thin enough at some point to permeate the copper - it can be that the initial resin is already thin enough.

Table 2 gives comparative information for some experiments into the parameters of the surface treatment and resin and indicates the electrical resistance between the top of carbon and the aluminium body for a 150mm long test piece and also shows the shear strength of a 30mm long test piece. Details of the measurement of resistance and shear strength are given below.

Examples of other resin system, alternative metals to copper, and alternative methods of spraying the metal coating are also given in Table 2.

**Table 2**

| Expt. No. | Pretreatment of | | Resin | Resistance top of carbon to aluminium Ω | Shear Strength of 30 mm length Kg (Ibs) Ambient Temperature | Shear Strength of 30 mm length Kg (Ibs) 160°C |
|---|---|---|---|---|---|---|
| | Aluminium | Carbon | | | | |
| 51} 70} | Grit blast & Cu spray 100 µm | Grit blast & Cu spray 100 µm | MY750/HT972 hot cured 150°C/1 hr | 0.75 0.74 | 1635 (3605) 1792 (3950) | 522 (1150) 240 (530) |
| 80 | Grit blast only | " | " | 0.87 | 540 (1190) | 118 (260) |
| 79 | Grit blast & Cu spray 100 µm | Copper plate 100 µm on base only | " | Fell apart after cure between Cu plate and carbon | | " |
| 26 | Grit blast only | Grit blast only | E11*, cold cure | 41.7 | " | " |
| 28 | Grit blast & Cu spray 100 µm | " | " | 2.7 | " | " |
| 24 | Grit blast only | Grit blast & Cu spray 100 µm | " | 0.97 | " | " |
| 37 | Grit blast & Cu spray 100 µm | " | E37*, cold cure (thinner that E11) | 0.82 | 973 (2145) | 98 (216) |
| 83 | Grit blast & Cu spray 100 µm | " | LY5210 HY2954 Hot cured 120°C/1 hr | .83 | 481 (1060) | 154 (340) |
| 116 | " | " | LY5210 6% DT075 HY2954 Hot cured 120°C/1 hr | .70 | 1633 (3600) | 733 (1615) |
| 56 | Grit blast & Zn spray 100 µm | Grit blast & Zn spray 100 µm | MY750 HT972 Hot cured 150°C/1 hr | .73 | 1021 (2250) | 340 (750) |
| 81 | Grit blast & Cu spray by arc gun 100 µm | Grit blast & Cu spray by arc gun 100 µm | " | .77 | 1383 (3050) | 191 (420) |

E11 and E37 are different 2-part epoxy adhesives (from Permabond of Eastleigh, Hampshire, England) which can be cured at room temperature and are rather thick. Experiments 26,28,24,37 and 80 show the desirability of a copper spray on both surfaces as far as resistance is concerned. A target resistance from top of carbon to aluminium is 1 Ω or less, and includes the resistance of the carbon. This corresponds to a conductivity from top of carbon to metal across the joint of 190 Ω⁻¹. m⁻² or greater. The preferred treatment is as in Experiments 51, 70, 116, 56 and 85 above which, it can be seen, give a very low resistance and a high strength. It should be noted that shear strength at ambient temperature can differ enormously from shear strength at elevated temperature, e.g. 160°C. Such temperatures are commonly encountered by current collectors in use.

Experiment 79 shows that copper plating, which provides an essentially non-porous metal layer, does not give the advantageous properties of copper spraying which provides a porous metal layer.

Resin system experiment 83 comprises Ciba resin LY5210 and hardener HY2954 mixed in the ratio 100:53 parts by weight. Strength was low as the resin mix became very thin and soaked up in the carbon. This drawback was overcome in system experiment 116, which used the same resin mixture modified by the addition of 6 parts of fumed silica (Ciba DT075) to 100 parts of the resin constituent.

In experiment 56, zinc was flame sprayed instead of copper, but otherwise the resin and other factors were the same as in experiments 51 and 70.

In experiment 81, copper was sprayed with an arc gun instead of a flame gun, but otherwise the resin and other factors were the same as in experiments 51 and 70.

The measurement of resistance is described below with reference to Fig. 2 in which a test piece is held by the aluminium body 2 in a vice 5 which is connected to the negative terminal of a d.c. supply. The positive terminal of the d.c. supply is connected to a resistance probe comprising a cylinder of copper having three contact points at the base. The potential difference from the carbon surface to the conductive aluminium is measured using an insulated springloaded pin at the centre of the copper cylinder which is connected to a volt meter 6 which in turn is directly connected to the aluminium body. The power supply is a d.c. constant current unit with the current set at 5 amps which is measured accurately using a current shunt fitted in series with the resistance jig.

In operation the hand held resistance probe is placed on the carbon surface at the point of measurement and a downward force applied to overcome the spring pressure of the springloaded sensing pin. The current is adjusted to achieve 5.0 Amps +/- 0.1. Measurements of mV on the volt meter 6 are recorded at specific points along the sample and the resistance calculated by Ohms law.

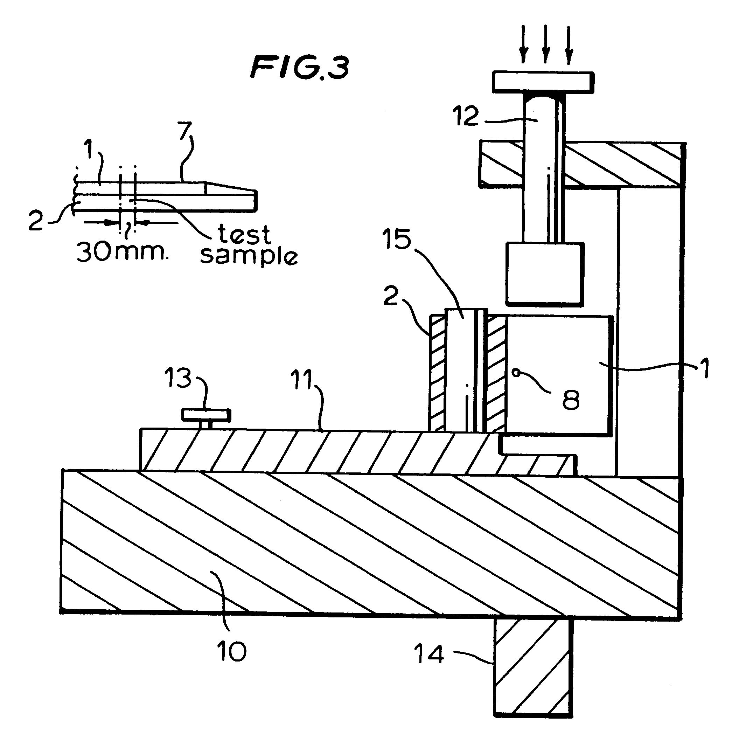

The measurement of shear strength is described below with reference to Fig. 3.

A 30mm long section is cut from a pantograph strip 7. The sample is prepared by drilling a 2 mm diameter hole 8 3mm from the Carbon/Aluminium interface to a depth of 15mm. A thermocouple assembly is placed in the hole and the sample is fitted to the shear Test Rig by a spigot 15. The shear force is applied along the length of the pantograph sample.

The shear test rig comprises of a heated platen 10 on top of which is a holder 11 which is allowed to slide under a hammer 12 and is located in position using a steel pin 13. The position of the hammer 12 relative to the sample is critical and the locating pin 13 ensures consistent positioning of the test sample to allow the applied force of the hammer to be on the carbon at the interface.

The whole test rig is placed on a Dennison Universal Force measurement machine, location and alignment is by means of a spigot 14 at the base on the shear test rig.

The Temperature controller and chart recorder is switched on and the required test temperature set on the temperature controller. The temperature rise is monitored and controlled to ensure there is no overshoot in temperature. When the required temperature is reached the Dennison press is engaged and a force is applied to the hammer. The travel rate of the press is 1/8th of an inch per minute (3.18mm/minute). The force is increased until the carbon shears away from the aluminium and the maximum force applied is measured and recorded.

The above description has related to electric current collectors but it is clear that the arrangement could be reversed so that it could be used for brushes for motors, dynamos or alternators.

## Claims

1. An article comprising a carbon body having a carbon body joint surface and a metal body having a metal body joint surface with an electrically conductive joint therebetween, characterised in that:-
a) the electrically conductive joint comprises a porous metal coating on at least the carbon body joint surface and an adhesive which penetrates the porosity of the metal coating; and
b) the adhesive penetrates the porosity of the carbon body joint surface the porous metal coating providing an electrically conductive path, and the adhesive providing a bond, between the carbon body joint surface and the metal body joint surface.

2. A method of forming an electrically conductive joint between a carbon body having a carbon body joint surface and a metal body having a metal body joint surface comprising the steps of:-
i) providing a porous metal coating on at least the carbon body joint surface;
ii) bonding said joint surfaces with an adhesive which penetrates the porosity of the metal coating and penetrates the porosity of the carbon body joint surface;
whereby the porous metal coating provides an electrically conductive path, and the adhesive provides a bond, between the carbon body joint surface and the metal body joint surface.

3. A method as claimed in claim 2 in which the metal body joint surface is provided with a porous metal coating.

4. A method as claimed in claim 2 or claim 3 in which metal and carbon surfaces are grit blasted prior to application of the porous metal coating or coatings.

5. A method as claimed in any of claims 2 to 4 in which the adhesive is a heat curing adhesive and the carbon body and metal body are pressed together during curing of the adhesive by press means which allow slippage to occur along the joints due to thermal expansion mismatch between carbon and metal.

## Patentansprüche

1. Ein Artikel, der einen Kohlenstoffkörper mit einer Kohlenstoffkörper-Verbindungsoberfläche und einen Metallkörper mit einer Metallkörper-Verbindungsoberfläche umfaßt, mit einer elektrisch leitenden Stoßfuge zwischen beiden, dadurch gekennzeichnet, daß:
a) die elektrisch leitende Stoßfuge eine poröse Metallbeschichtung auf mindestens der Kohlenstoffkörper-Verbindungsoberfläche und einen Haftstoff umfaßt, der die Porosität der Metallbeschichtung durchtränkt; und
b) der Haftstoff die Porosität der Kohlenstoffkörper-Verbindungsoberfläche durchtränkt,
wobei die poröse Metallbeschichtung einen elektrisch leitenden Pfad und eine Bindung zwischen der Kohlenstoffkörper-Verbindungsoberfläche und der Metallkörper-Verbindungsoberfläche schaffen.

2. Ein Verfahren zum Bilden einer elektrisch leitenden Stoßfuge zwischen einem Kohlenstoffkörper mit einer Kohlenstoffkörper-Verbindungsoberfläche und einem Metallkörper mit einer Metallkörper-Verbindungsoberfläche, das folgende Schritte aufweist:
i) Schaffen einer porösen Metallbeschichtung auf mindestens der Kohlenstoffkörper-Verb indungsoberfläche;
ii) Bonden der genannten Verbindungsoberflächen mit einem Haftstoff, der die Porosität der Metallbeschichtung durchtränkt und der die Porosität der Kohlenstoffkörper-Verbindungsoberfläche durchtränkt; wodurch die poröse Metallbeschichtung einen elektrisch leitenden Pfad, und der Haftstoff eine Bindung zwischen der Kohlenstoffkörper-Verbindungsoberfläche und der Metallkörper-Verbindungsoberfläche schaffen.

3. Ein Verfahren nach Anspruch 2, bei dem die Metallkörper-Verbindungsoberfläche mit einer porösen Metallbeschichtung versehen ist.

4. Ein Verfahren nach Anspruch 2 oder Anspruch 3, bei dem Metall- und Kohlenstoffoberflächen vor der Anbringung der porösen Metallbeschichtung oder Beschichtungen mit Metallsand bestrahlt werden.

5. Ein Verfahren nach irgendeinem der Ansprüche 2 bis 4, bei dem der Haftstoff ein hitzehärtender Haftstoff ist und der Kohlenstoffkörper sowie der Metallkörper während des Härtens des Haftstoffes durch Preßmittel aneinandergepreßt werden, die das Auftreten einer Gleitbewegung entlang der Fugen aufgrund einer thermischen Expansionsversetzung zwischen Kohlenstoff und Metall erlauben.

## Revendications

1. Objet comprenant un corps de carbone ayant une surface de jonction de corps de carbone et une corps de métal ayant une surface de jonction de corps de métal avec un joint conducteur de l'électricité entre les deux surfaces, caractérisé en ce que :
a) le joint conducteur de l'électricité comprend un revêtement métallique poreux sur au moins la surface de jonction du corps de carbone et un adhésif qui pénètre la porosité du revêtement métallique ; et
b) l'adhésif pénètre la porosité de la surface de jonction du corps de carbone, le revêtement métallique poreux procurant un trajet conducteur de l'électricité et l'adhésif procurant une liaison entre la surface de jonction du corps de carbone et la surface de jonction du corps de métal.

2. Procédé pour former un joint conducteur de l'électricité entre un corps de carbone ayant une surface de jonction de corps de carbone et un corps de métal ayant une surface de jonction de corps de métal, comprenant les étapes suivantes :
i) appliquer un revêtement métallique poreux sur au moins la surface de jonction du corps de carbone ;
ii) lier lesdites surfaces de jonction avec un adhésif qui pénètre la porosité du revêtement métallique et pénètre la porosité de la surface de jonction du corps de carbone,
d'où il résulte que le revêtement métallique poreux procure un trajet conducteur de l'électricité et que l'adhésif procure une liaison entre la surface de jonction du corps de carbone et la surface de jonction du corps de métal.

3. Procédé selon la revendication 2, dans lequel la surface de jonction du corps de métal est pourvue d'un revêtement métallique poreux.

4. Procédé selon la revendication 2 ou la revendication 3, dans lequel les surfaces de métal et de carbone sont grenaillées avant l'application du(des) revêtement(s) métallique(s) poreux.

5. Procédé selon l'une des revendications 2 à 4, dans lequel l'adhésif est un adhésif thermodurcissable et le corps de carbone et le corps de métal sont pressés l'un contre l'autre pendant la prise de l'adhésif par des moyens de pression qui autorisent un glissement le long des joints résultant de la différence de dilatation thermique entre le carbone et le métal.
